# EUROPEAN PATENT APPLICATION

(11) **EP 0 820 185 A2**
(43) Date of publication of application: **21.01.1998**
(21) Application number: 97111936.7
(22) Date of filing: 14.07.1997
(51) Int. Cl.: H04N 1/32

(54) **Digital multi-functional printer**

(30) Priority: 15.07.1996 JP 184725/96
(71) Applicant: MATSUSHITA ELECTRIC INDUSTRIAL CO., LTD, Kadoma-shi, Osaka 571 (JP)
(72) Inventor: Takahashi, Naoki, Katano-shi, Osaka 576 (JP)
(74) Representative: VOSSIUS & PARTNER

(57) **Abstract**

A digital multi-functional printer comprises more than one image input member (2, 3, 4), more than one print queue (14, 15, 16) for administrating independently the print request jobs sent from those input members (2, 3, 4), and a print queue administration system (7) for selecting and printing the print request job with the highest priority out of the print queues (14, 15, 16). When a job is placed into a print queue with a higher priority than the priority of the print queue of the job that is currently performed, then the print queue administration system (7) temporarily interrupts the job that is currently being executed and starts the job with the higher priority. The interrupted job is resumed automatically, after the job that cut into the line is finished. The user has the option of setting the priority order of the print queues (14, 15, 16).

## Description

This invention relates to a digital multi-functional printer, comprising more than one image data input member and performing image formation on recording paper. The image data input members comprise at least one input member selected from the group consisting of an image scanner for optically reading manuscript images, a fax modem for sending and receiving image data over a public line, and a network interface for sending and receiving image data over a network.

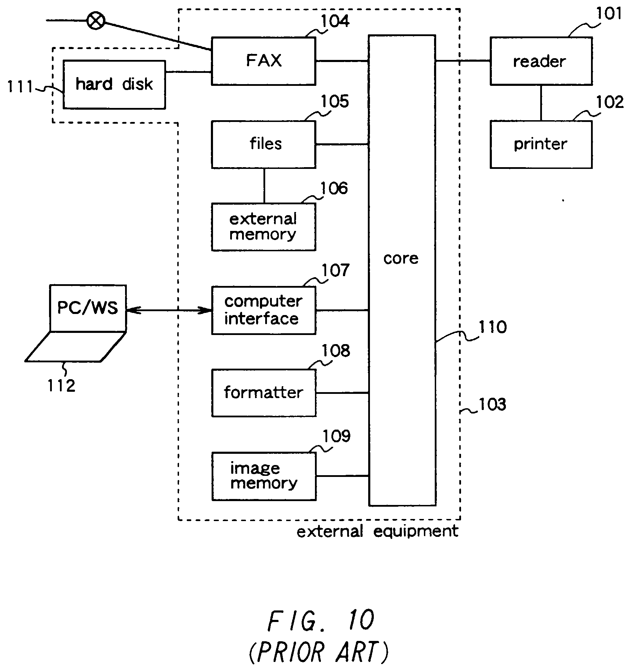

FIG. 10 shows the general configuration of a conventional digital multi-functional printer. The digital multi-functional printer shown in FIG. 10 is composed of: an image input device 101 (called "reader" below) for converting the manuscript into image data; an image output device 102 (called "printer" below) for printing out the image data on recording paper supplied by a multiple type recording paper cassette on the basis of the print command that has been entered; and an external equipment 103, connected to the reader 101.

The external equipment 103 comprises: a fax 104; files 105; an external memory 106 connected to the files; a computer interface 107 for providing a connection to a computer 112 or the like; a formatter 108 for converting the information from the computer 112 in a pre-determined format; an image memory 109 for temporarily storing the image information from the reader 101 or the information sent from the computer 112; and a core 110 for controlling these functional parts.

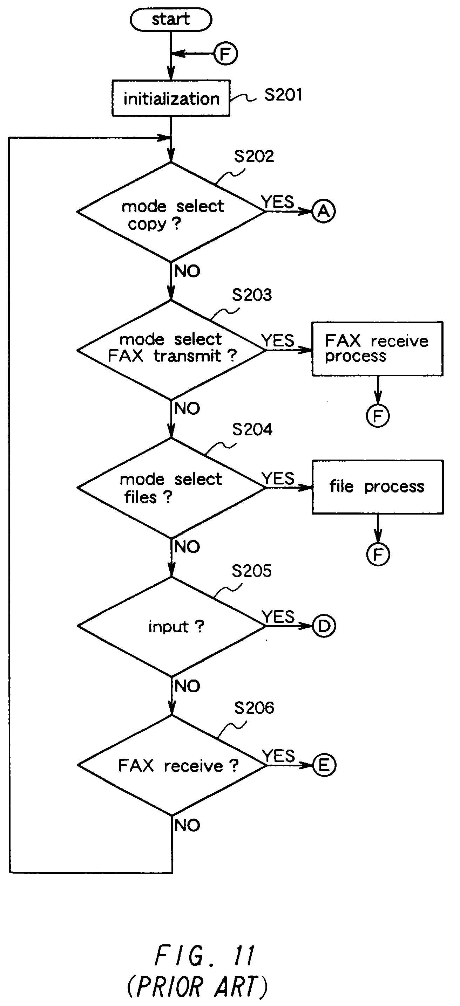

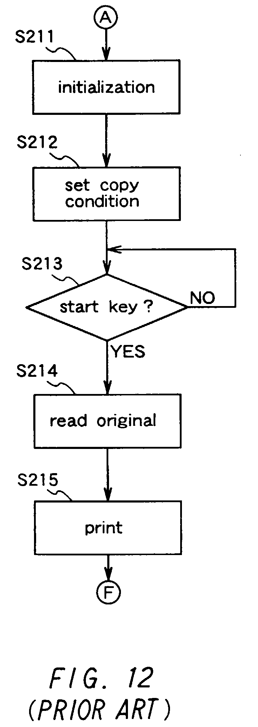

The procedure of image formation with the above configuration is explained below. FIG. 11 is a flowchart showing the operation of the entire system, and FIG. 12 is a flowchart showing the copy operation.

In step S201, after connecting the system to a power source, a predetermined initialization is performed. In step S202, a decision is made as to whether the selected mode is the copy mode or not. If the mode selected by the user from the control panel is the copy mode, then a switchover to the process steps shown in FIG. 12 takes place. If the selected mode is not the copy mode, then a decision is made in step S203 as to whether the selected mode is the fax send mode or not. In the same manner, it is confirmed successively whether the select files mode, the external input mode, or the fax receive mode is selected, and if so, then the appropriate procedure is performed. In the case that no mode is selected, the above decisions are repeated upon return to step S202.

Next, the flowchart of the copy mode in FIG. 12 is explained. First, initialization for the copy operation is performed (S211), and the copy conditions that have been entered over the control panel are established (S212). Then, the actuation of the start key, which is a part of the control panel, is awaited (S213). When the start key is pressed, the manuscript is read in with the reader 101 (S214), and the printer carries out the printing (S215). When the printing is finished, the procedure returns to step S201 in FIG. 11.

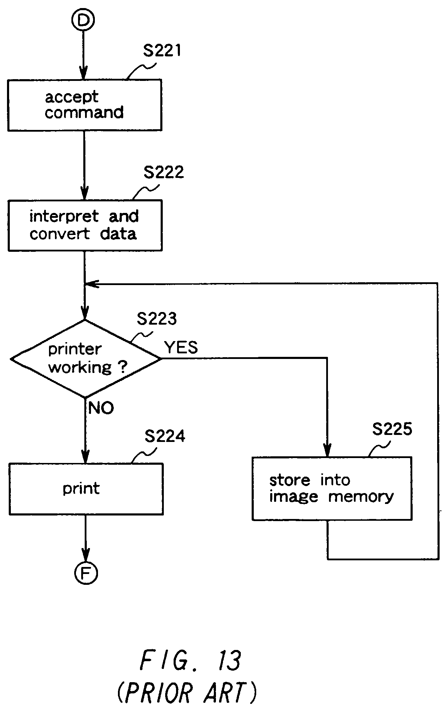

FIG. 13 shows the mode for printing on command from an external computer. In this mode, first the command sent by the computer 112 is received by the computer interface 107 (S221), and the data are sent to the formatter 108 via the core 110. Then, the data are interpreted and converted into meaningful information (S222). The next step is to confirm whether the printer 102 currently is in operation (S223). If the printer 102 is not in operation, then the printing data are given out to the printer 102 and printing is executed. On the other hand, if the printer 102 is in operation, then the printing data are stored in the image memory 109 (S225), and the printing is executed at a time when the printer 102 is not in operation (S223, S224). As soon as the data output is finished, the procedure returns to step S201 in FIG. 11.

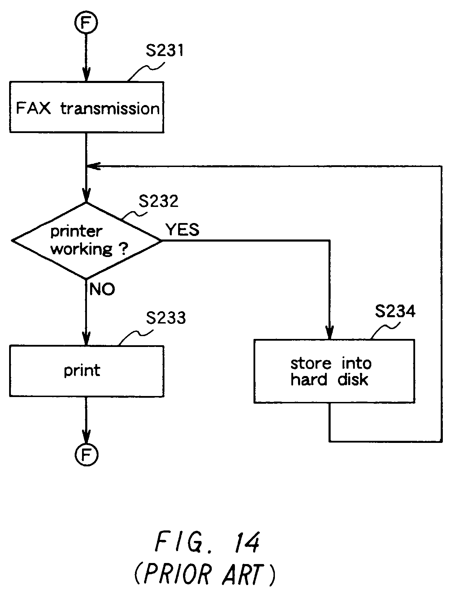

FIG. 14 is a flowchart of the procedure when a facsimile is received. The facsimile is received with the fax 104 (S231), and it is confirmed whether the printer 102 currently is in operation (S232). If the printer 102 is not in operation, then the data are sent to the printer 102, and the printing process is executed (S233). If the printer 102 is in operation, then the data are recorded on a hard-disk 111 (S234), which is connected to the fax 104, and the printing is performed at a time when the printer 102 is not in operation (S232, S233). As soon as the printing is finished, the procedure returns to step S201 in FIG. 11.

Switching between the above modes occurs when the control panel is operated, when data is received with the fax 104, or when an external command is received by the computer interface 107. The setting of the priority order of the modes is performed by the core 110. In other words, when an inquiry is made from the computer 112 about a present job, then the computer interface 107 inquires from the core 110 information such as the type and amount of the presently requested jobs, and transmits the result to the computer 112. Based on that information, a user can change the job order or interrupt jobs via the computer 112. In that way, a priority order can be set optionally.

Furthermore, information on the presently requested jobs is displayed on the control panel. The job order can be altered with the control panel, and specific jobs can be interrupted. Usually, the expected job launching time is assumed from the reception time of a job, and the jobs are performed starting with the job that has the earliest expected job launching time, but it is possible to alter that order with the computer 112 or the control panel. In that case, it can also be prescribed whether the computer 112 or the control panel is given priority.

The purpose of this invention is to make switching between jobs possible after every page-sized unit in a digital multi-functional printer, which comprises more than one image input member and one image formation member, to enable easy establishment of a priority order by providing more than one print queue, and to provide a digital multi-functional printer with high utilization efficiency.

The digital multi-functional printer of the present invention comprises: more than one image data input member; more than one print queue for temporarily storing more than one print job information including image data of more than one page, which is input from the corresponding image data input member, and print control data; a job control system for selecting one of the print queues, based on the priority order that has been established by the user, and giving out the print job information in page-sized units; and an image formation member for forming an image based on the print job information given out by the job control system. It is preferable that the job control system comprises a priority order setting system for altering the priority order established by the user.

In the above configuration, an image scanner for optically reading a manuscript image, a fax modem for receiving facsimile image data, and an interface for providing a connection to an external computer can be included as more than one image data input member. Usually, the priority of the print queue holding the print job information that has been input from the image scanner is set the highest, whereas the priority of the print queue holding the print job information that has been input from the interface connected to an external computer is set the lowest.

Furthermore, it is preferable that the job control system interrupts the image formation process based on the print job information of the current image formation after a page-sized unit when print job information was placed in a print queue with a priority that is higher than the priority of the current image formation, and starts image formation based on the print job information placed in the print queue with the higher priority, and then resumes the image formation starting from the page following the interruption, when the print job information in the print queue with the higher priority is exhausted.

Another configuration of the digital multi-functional printer of the present invention comprises: more than one image data input member; more than one print queue for temporarily storing more than one print job information including print control information that comprises image data of more than one page and image type information showing from which image data input member those image data were entered; a queuing system for storing print job information, based on the priority order established by the user, in print queues that are specified by the image type information; a job selector for selecting one of the print queues, based on the output priority for image formation that was given to each print queue, and giving out in page-sized units the print job information stored in that print queue; and an image formation member for forming an image based on the print job information that was given out. It is preferable that this configuration of the digital multi-functional printer of the present invention further comprises a priority order setting system for altering the priority order referenced by the queuing system.
- FIG. 1: is a condensed block diagram of a digital multi-functional printer according to the first example of the present invention.
- FIG. 2: shows the structure of the print job information.
- FIG. 3: is a block diagram of the print queue selector.
- FIG. 4: is a flowchart showing the selection rules of the priority selector.
- FIG. 5: is a drawing of the priority order setting mode screen of the control panel.
- FIG. 6: is a condensed block diagram of a digital multi-functional printer according to the second example of the present invention.
- FIG. 7: is a structural drawing of the print queue input selector.
- FIG. 8: is a flowchart showing the selection rules of the image type selector.
- FIG. 9: is a flowchart showing the selection rules of the print queue output selector.
- FIG. 10: is a condensed block diagram of a conventional digital multi-functional printer.
- FIG. 11: is a flowchart showing the operation of the entire system in a conventional digital multi-functional printer.
- FIG. 12: is a flowchart showing the copy operation in a conventional digital multi-functional printer.
- FIG. 13: is a flowchart showing the printing operation according to an external computer command in a conventional digital multi-functional printer.
- FIG. 14: is a flowchart showing the operation when a facsimile is being received in a conventional digital multi-functional printer.

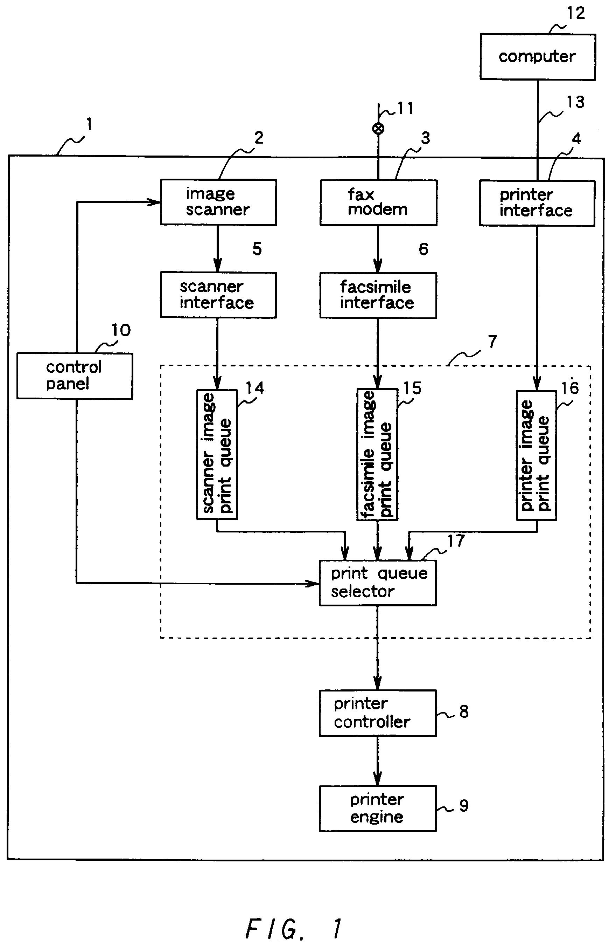

FIG. 1 is a condensed block diagram of a digital multi-functional printer according to a first example of the present invention. This digital multi-functional printer 1 comprises: an image scanner 2 for reading in manuscript images; a scanner interface 5 for giving out the print job information that the text/image data read in from the image scanner 2 is converted into after being attached to the print control data for internal processing; a fax modem 3 for sending and receiving facsimile image data over a public line 11; a facsimile interface 6 for giving out facsimile image data that were entered from the fax modem 3, after the facsimile image data have been converted into print job information; a printer interface 4 for giving out text/image data that have been received from a computer 12, which is connected over a network 13, after the text/image data have been converted into print job information.

Moreover, the digital multi-functional printer 1 comprises: a print queue controller 7 for receiving the print job information from the above three image input members, placing the print job information temporarily in three internal print queues 14 - 16, and giving out the print job information stored therein; a printer controller 8 for giving out the text/image data while performing synchronization with a printer engine 9, based on the print job information output from print queue controller 7; and a control panel 10 for displaying the current state to the user and entering operating instructions.

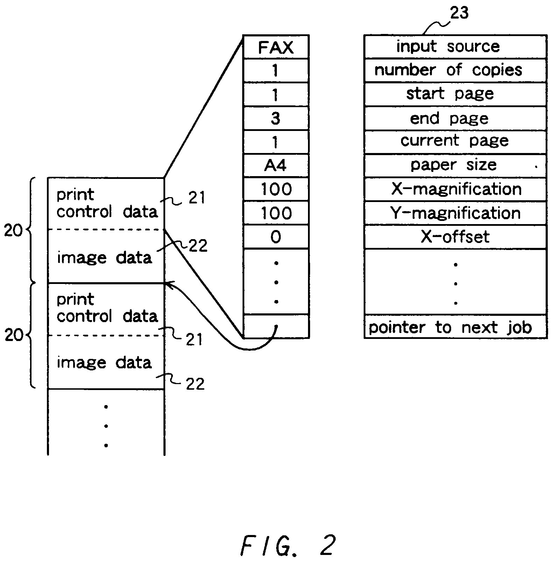

FIG. 2 shows the structure of the print job information. The print job information 20 is a pair of print control data 21 and text/image data 22. The text/image data 22 can include the text/image data of more than one page. The print control data 21 is a series of parameters to be used when the image is formed, and is annotated in a series of procedures and formats defined in print control data table 23. The entered source information (for example, the value "COPY") is also included in the print control data 21. The print job information 20 has a list structure comprising a pointer to the next print job information, placed at the end of the print control data 21. If there is no next print job information, then the pointer to the next print job information is a null pointer.

The print queue controller 7 includes: a scanner image print queue 14 for holding temporarily the print job information entered from the scanner interface 5; a facsimile image print queue 15 for holding temporarily the print job information entered from the facsimile interface 6; a printer image print queue 16 for holding temporarily the print job information entered from the printer interface 4; and a print queue selector 17 for selecting one of the three print queues 14 - 16 and performing the output. This print queue selector 17 can be regarded as a job control system.

The operation of the above configuration is explained below. First of all, the manuscript that is read in from image scanner 2 is converted into an electric signal and printed out with the printer engine 9. When the so-called copy operation is performed, the user switches over to the copy mode by actuating the control panel 10. After that, and after conditions such as the size of the recording paper, the number of copies, and the magnification factor have been set, the manuscript image is read in from the image scanner 2. The scanner interface 5 adds print control data such as the size of the recording paper, the number of copies, and the magnification factor set by the user with the control panel 10 to the text/image data read in with image scanner 2, and places the data temporarily in the scanner image print queue 14 inside the print queue controller 7.

Furthermore, independently from the copy operation, the facsimile interface 6 converts the facsimile reception data, which have been entered into the fax modem 3 via the public line 11, into the print job information 20 shown in FIG. 2, and places the data temporarily in the facsimile image print queue 15 inside the print queue controller 7. This operation is called "facsimile receiving operation" below.

Similarly, independently from the copy operation and the facsimile receiving operation, the printer interface 4 converts the text/image data and the print control data, which have been sent from the external computer 12 via the network 13 into the print job information shown in FIG. 2, and places the data temporarily in the printer image print queue 16 inside the print queue controller 7. This operation is called "remote printing operation" below.

The scanner image print queue 14, the facsimile print queue 15, and the printer image print queue 16 hold the print job information entered from the scanner interface 5, the facsimile interface 6, and the printer interface 4 respectively.

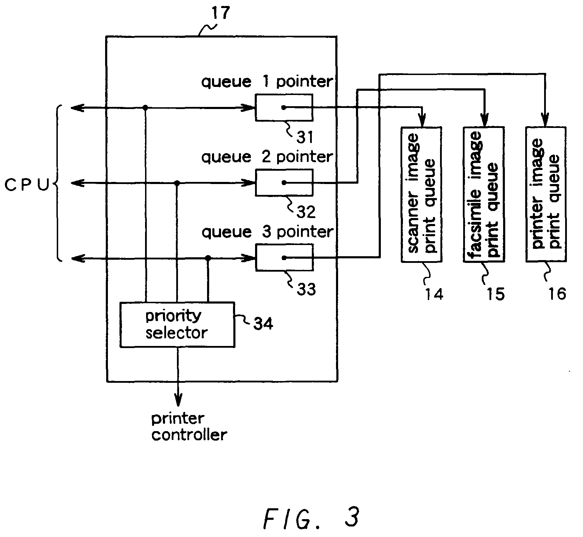

FIG. 3 shows the configuration of the print queue selector 17. The print queue selector 17 includes: three print queue pointers 31 - 33 pointing to the first element of the three print queues and a priority selector 34 for selecting one of the three entered print queue pointers by following the rules given below, and for giving out the first print job information stored in that print queue. The priority selector 34 can be regarded as a priority order setting system. The priority order of the print queue pointers 31 - 33 is designated as follows: the print queue pointer 31 has the highest priority, and the print queue pointer 33 has the lowest priority. That is, the priority order is set in the order: copy operation before facsimile receiving operation before remote printing operation.

The print queue pointer 31 holds the address of the first print job information held in the scanner image print queue 14. The print queue pointer 32 holds the address of the first print job information held in facsimile image print queue 15. The print queue pointer 33 holds the address of the first print job information held in the printer image print queue 16. If the print queues are empty, then the print queue pointers are null pointers.

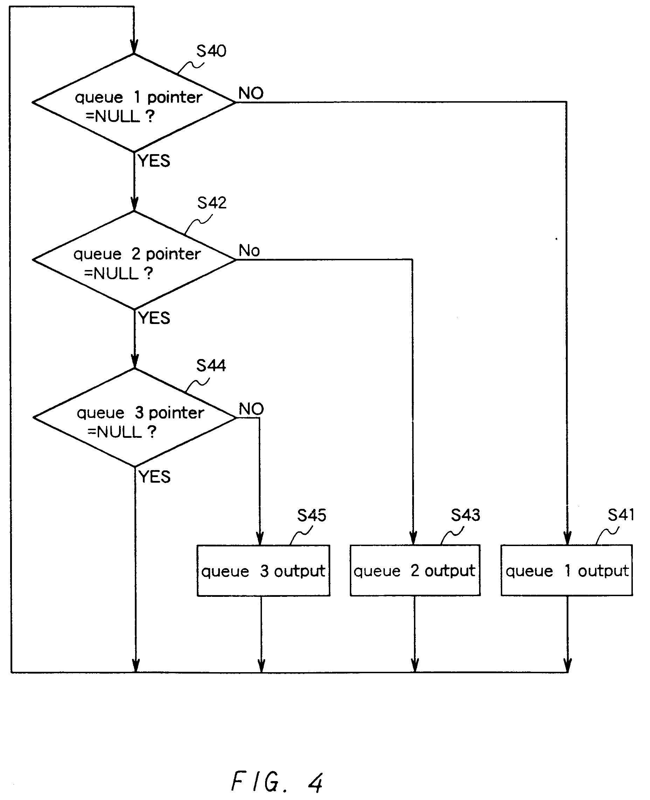

FIG. 4 shows a flowchart of the selection rules of the priority selector 34. The priority selector 34 selects one of the three print queue pointers according to the rules shown in FIG. 4. First of all, the queue 1 pointer 31 is examined (S40). When the queue 1 pointer 31 is not null, that is when the scanner image print queue 14 holds more than one print job information, then the print job information held in the scanner image print queue 14 is selected, regardless of the status of the other print queues. Then, the print job information stored in scanner image print queue 14 is given out (S41). If the scanner image print queue 14 does not hold print job information, then it is confirmed whether the queue 2 pointer 32 is null (S42), and if print job information is stored in the facsimile image print queue 15, then the facsimile image print queue 15 is selected, and its first print job information is given out (S43). Then, only when there is no print job information stored in scanner image print queue 14 and in facsimile image print queue 15, it is confirmed whether the queue 3 pointer 33 is null (S44), and if print job information is held in the printer image print queue 16, then the print job information stored in the first element of printer image print queue 16 is given out (S45). When no print job information whatsoever is stored in the three print queues, then there is no output.

Here, the text/image data are given out by the print queue selector 17 in page-sized units. Whenever a page is given out, the information in that print control data on the number of copies and on the presently printed page is actualized. That is, 1 is added to the value of the presently printed page information, which has been set to the value of the print start page information in the beginning, and when that value becomes equal to the value of the print stop page information, then 1 is subtracted from the value of the copy number information and the value of the presently printed page information returns to the value of the print start page information.

Because the flowchart in FIG. 4 is repeated in page-sized units, it is detected whether the print queues hold print job information whenever the printout of one page is completed. If a print queue holds print job information with a priority higher than the priority of the print queue that is currently being processed, then the current print queue processing is interrupted after a page-sized unit. Nevertheless, in the case of interruption, when the processing of the higher priority print queue is completed and the interrupted print queue processing is about to be resumed, information about from which page of which volume it should be resumed can be readily obtained, because the remaining number of copies and the printed pages are preserved as a part of the print control information in the print job information.

Here, the print job information stored in facsimile image print queue 15 and printer image print queue 16 will not be processed as long as print job information is remaining in the scanner image print queue 15, because a setting was made so that the print job information of the scanner image print queue 14 is processed with the highest priority. This priority setting can be changed by shifting the assignment of the scanner image print queue 14, the facsimile image print queue 15, and the printer image print queue 16 to the print queue pointers 31 - 33.

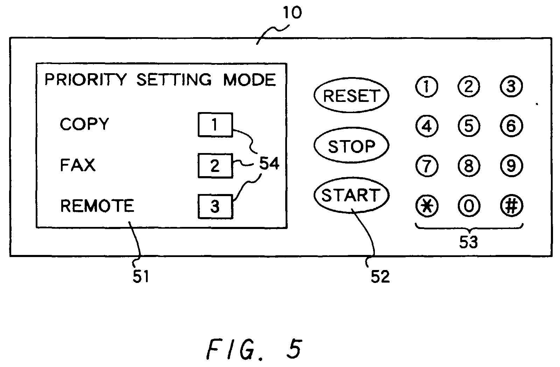

The priority order of the print queues is set by operation of the control panel 10, which causes the CPU to rewrite the addresses of the print queue pointers. FIG. 5 shows the screen of control panel 10 for the priority order setting mode. The priority order can be set by entering numerical values (1) - (3) over a ten-key keyboard 53, after an input selection has been made by touching a priority order frame 54, corresponding to the operations displayed on an LCD touch panel 51. The priority of the operation with the priority (1) is the highest, and the priority of the operation with the priority (3) is the lowest. To give an example of internal processing, if the print queue pointer 31 corresponding to an operation set to priority (1) is rewritten to the first address of scanner image print queue 14, then the printout due to copy operation is performed with the highest priority.

The communication with the printer engine 9 is performed over printer controller 8 based on page-sized units of print control data and text/image data that are given out by the print queue selector 17, and the setting for output is performed. After the setting is finished, the printer controller 8 gives out the text/image data while synchronizing itself with printer engine 9. The printer engine 9 performs image formation of the incoming text/image data on recording paper under the prescribed conditions.

The above explanations pertain to the operation of a digital multi-functional printer as shown in FIG. 1. In this example, the printout due to the copy operation was set to be performed with the highest priority. The copy operation is processed with higher priority than a remote printing operation manipulating from a distant location via the network 13, or a facsimile receiving operation sent via the public line 11, because the user is standing and manipulating in front of the equipment. However, the user can alter the priority order settings freely and the user's waiting time can be minimized by assigning a higher priority to the operation that he uses most frequently.

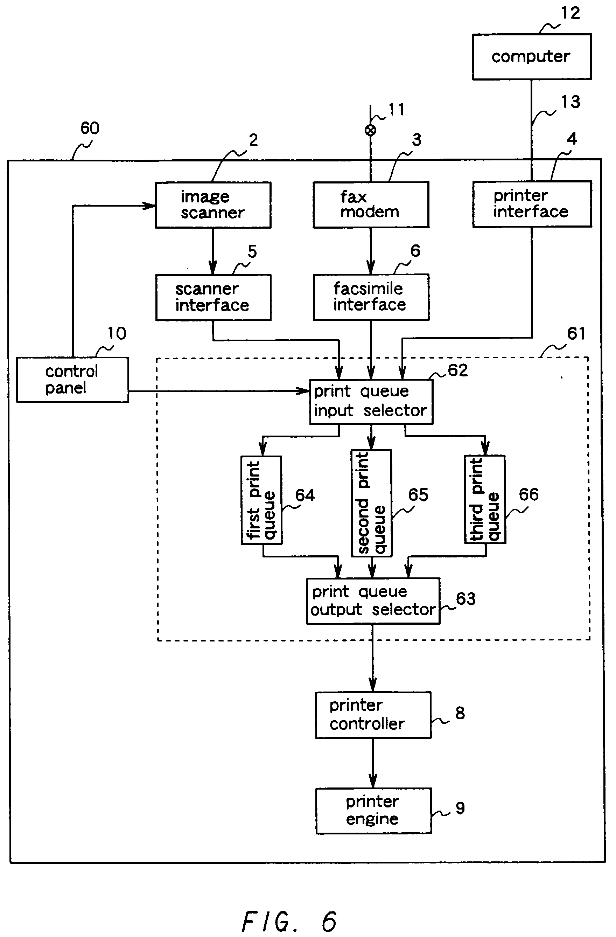

Next, a second example of the present invention is explained with reference to FIGS. 6 - 9. FIG. 6 is a condensed block diagram of a digital multi-functional printer according to the second example of the present invention. This digital multi-functional printer 60 comprises: an image scanner 2 for reading in a manuscript image; a scanner interface 5 for giving out the print job information that the text/image data read in from the image scanner 2 is converted into after being attached to the print control data for internal processing; a fax modem 3 for sending and receiving facsimile image data over a public line 11; a facsimile interface 6 for giving out facsimile image data that were entered from the fax modem 3 after the facsimile image data have been converted into print job information; a printer interface 4 for giving out text/image data that have been received from a computer 12 that is connected over a network 13, after the text/image data have been converted into print job information; a print queue controller 61 for receiving the print job information from the above mentioned three image input members, placing the print job information temporarily in three internal print queues 64 - 66, selecting one of the three print queues, and giving out the print job information stored therein; a printer controller 8 for giving out the text/image data that are given out from the print queue controller 61 while synchronizing itself with a printer engine 9; a printer engine 9 for forming an image on recording paper based on the text/image data; a control panel 10 for showing the current status to the user and performing input of operating instructions by the user. As in the first example, a pair of print control data and text/image data is called "print job information".

The print queue controller 61 comprises: a first print queue 64, a second print queue 65, and a third print queue 66, which are temporarily holding print job information; a print queue input selector 62 for holding the print job information entered from the scanner interface 5, the facsimile interface 6, and the printer interface 4, after one of the print queues 64 - 66 has been selected based on the image type information showing the input source; and a print queue output selector 63 for selecting one of the three print queues 64 - 66 and giving out the print job information therein. The print queue input selector 62 can be regarded as a queuing system.

First, when the copy operation is performed, the user switches over to the copy mode by actuating the control panel 10. After that, and after conditions such as the size of the recording paper, the number of copies, and the magnification factor have been established, the manuscript image is read in from the image scanner 2. The scanner interface 5 adds print control data such as the size of the recording paper, the number of copies, and the magnification factor set by the user with the control panel 10 to the text/image data that were read in with image scanner 2, converts the data into print job information, and sends it to the print queue controller 62. At this time, the value "COPY" is inscribed in the frame for the input source of the print control data 21, indicating that the image was entered by way of the copy operation.

Furthermore, independently from the copy operation, the facsimile interface 6 converts the facsimile reception data, which have been entered into the fax modem 3 via the public line 11, into print job information and gives it out to print queue controller 61. At this time, the value "FAX" is inscribed in the frame for the input source of the print control data 21, indicating that the image was entered by way of the facsimile receiving operation.

Similarly, independently from the copy operation and the facsimile receiving operation, the printer interface 4 converts the text/image data and the print control data, which have been sent from the external computer 12 via the network 13, and gives it out to print queue controller 61. At this time, the value "PRINT" is inscribed in the frame for the input source of the print control data 21, indicating that the image was entered by way of the remote printing operation.

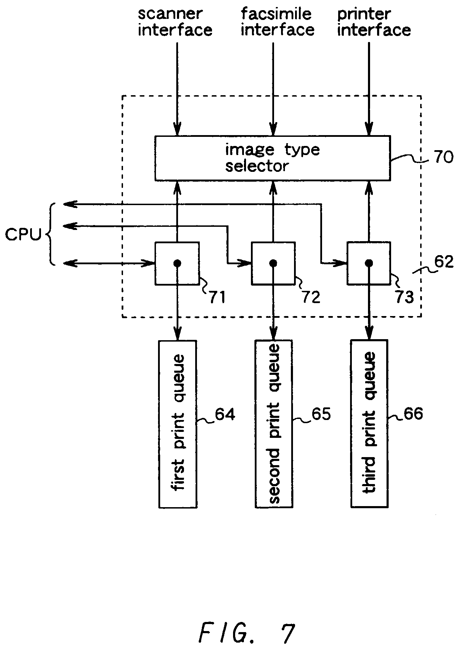

FIG. 7 shows the configuration of the print queue input selector 62. The print queue input selector 62 comprises a scanner image queue pointer 71 for holding a pointer to a print queue storing the print job information that has been given out from the scanner interface 5; a facsimile image queue pointer 72 for holding a pointer to a print queue storing the print job information that has been given out from the facsimile interface 6; a printer image queue pointer 73 for holding a pointer to a print queue storing the print job information that has been given out from the printer interface 4; and an image type selector 70 for selecting one of the three queue pointers 71 - 73 according to the value inscribed in the referenced input source frame, after referencing the information of the input source frame in the print control data 21 of the entered print job information 20, and for giving out the print job information to the print queue indicated by the selected queue pointer.

Here, the scanner image queue pointer 71 usually points to the first element of the print queue storing the print job information that is sent from scanner interface 5. Similarly, the facsimile image queue pointer 72 usually points to the first element of the print queue storing the print job information that is sent from facsimile interface 6, and the scanner image queue pointer 73 usually points to the first element of the print queue storing the print job information that is sent from printer interface 4. The three print queues 64 - 66 have a priority order: the priority of the first print queue 64 is set to be the highest, and the priority of the third print queue 66 is set to be the lowest. This priority order cannot be altered. In FIG. 7, the priority of the print job information sent from the scanner interface 5 is set higher than other print job information, because the pointer to the print queue 64 with the highest priority is held in the scanner image queue pointer 71.

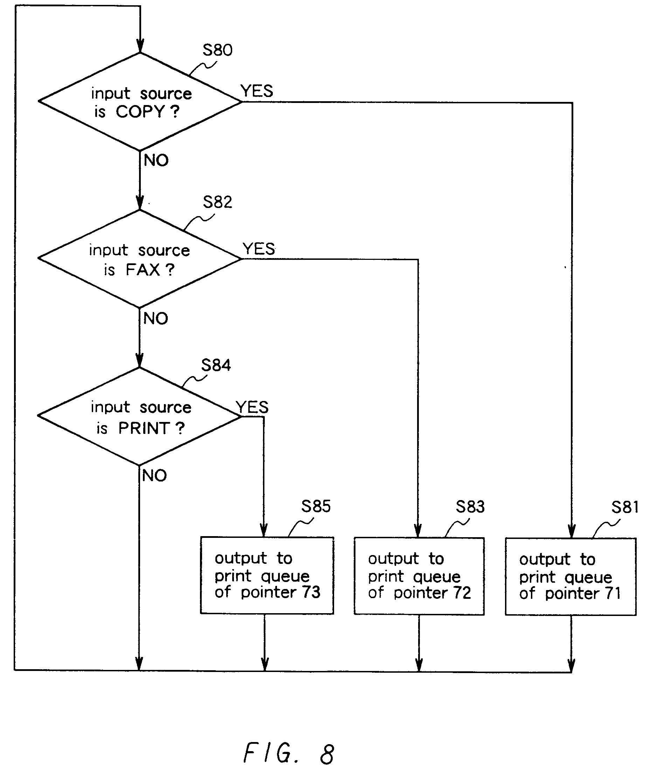

FIG. 8 shows a flowchart of the selection rules of image type selector 7. The image type selector 70 gives out print job information to the print queue selected as shown in the flowchart in FIG. 8. First of all, the value of an input source frame "SOURCE", which is part of the print control data of the entered print job information, is referenced. It is confirmed whether the value of "SOURCE" is "COPY" (S80), and if so, then the print job information is given out to the print queue indicated by scanner image queue pointer 71 (S81). Here, the print job information is given out to the first print queue 64 with the highest priority. If not so, then it is confirmed whether the value is of "SOURCE" is "FAX" (S82). If the value of "SOURCE" is "FAX", then the print job information is given out to the print queue indicated by facsimile image queue pointer 72 (here the second print queue 65) (S83). If not so, then it is confirmed whether the value of "SOURCE" is "PRINT" (S84). If the value of "SOURCE" is "PRINT", then the print job information is given out to the print queue indicated by printer image queue pointer 73 (here the third print queue 66) (S85).

Here, the CPU can read and write into the three print queues 71 - 73. Therefore, as in the first example, the CPU overwrites the contents of the queue pointers 71 - 73 when the priority of every operation is entered over control panel 10 in the priority order setting mode. The priority of the operation corresponding to the queue pointer written by the pointer indicating the first print queue 64 becomes the highest priority. Consequently, the CPU can be regarded as a priority order setting system.

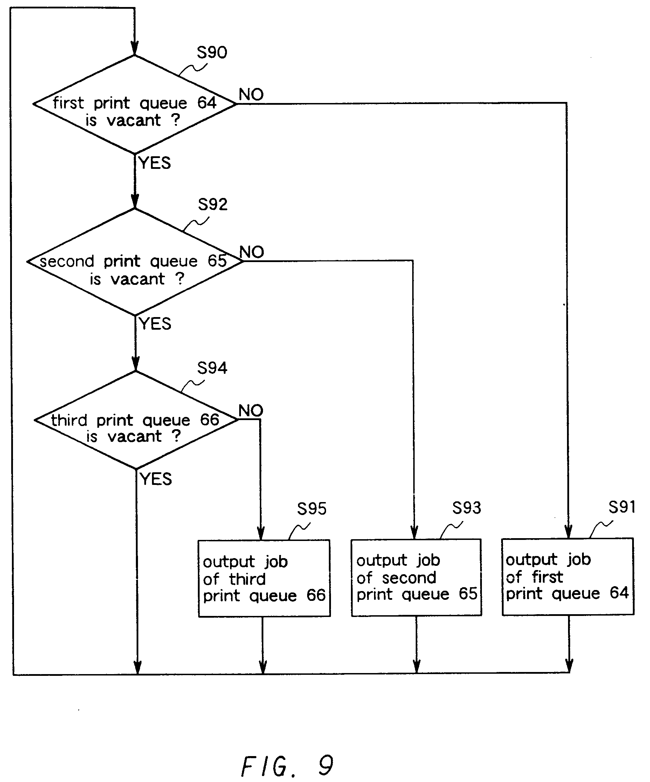

Depending on the print queue output selector 63, one of the sets of print job information stored in the print queues 64 - 66 is given out to the printer controller 8. The selection rules of the print queue output selector 63 are shown in the flowchart in FIG. 9: First, the state of the first print queue 64 is examined (S90). When print job information is stored in the first print queue 64, then that print job information is given out to the printer controller 8 with the highest priority (S91). If the first print queue 64 is vacant, then the state of the second print queue 65 is examined (S92). If print job information is stored in the second print queue 65, then this print job information is given out to the printer controller 8 (S93). Likewise, if both the first print queue 64 and the second print queue 65 are empty, then the state of the third print queue 66 is examined (S94). If print job information is stored in the third print queue 66, then this print job information is given out to the printer controller 8 (S95).

Here, as in the first example, the text/image data are given out by the print queue output selector 63 in page-sized units. Whenever a page is given out, the information in that print control data on the number of copies and on the presently printed page is actualized. That is, 1 is added to the value of the presently printed page information, which has been set to the print start page information in the beginning, and when that value becomes equal to the value of the print stop page information, then 1 is subtracted from the value of the copy number information and the value of the presently printed page information is returned to the value of the print start page information.

Because the flowchart in FIG. 9 is repeated in page-sized units, it is detected whether the print queues hold print job information whenever the printout of one page is completed, and when a print queue holds print job information with a priority higher than the priority of the print queue that is currently being processed, then the current print queue processing is interrupted after a page-sized unit. Nevertheless, in the case of interruption, when the processing of the higher priority print queue is completed and the interrupted print queue processing is resumed, information about from which page of which volume the print queue processing should be resumed can be readily obtained, because the remaining number of copies and the printed pages are preserved as a part of the print control information in the print job information.

The communication with the printer engine 9 is performed over the printer controller 8 based on page-sized units of print control data and text/image data that are given out by the print queue output selector 63, and the setting for output is performed. After the setting is finished, the printer controller 8 gives out the text/image data while synchronizing itself with the printer engine 9. The printer engine 9 performs image formation of the incoming text/image data on recording paper under the prescribed conditions.

The above explanations pertain to the operation of a digital multi-functional printer as shown in FIG. 6. Also in this example, as in the first example, the image formation based on the print job information read in from the image scanner 2 is set to be performed with the highest priority. This is to minimize the user's waiting time, because the user is standing and manipulating in front of the equipment during the copy operation. However, the user can alter the priority order settings freely and the user's waiting time can be minimized by assigning a higher priority to the operation that he uses most frequently.

Although the first and second example were explained for the case of three print queues, the present invention is in no way limited to that number. Furthermore, the digital multi-functional printers 1 and 60 are connected to an external computer 12 via a network 13. However, instead of being connected to only one computer, they can also be connected to more than one computer. The communications method in that case could be a parallel communication such as the centronics standard or a serial communication such as the RS 232 or RS 485 standards.

## Claims

1. A digital multi-functional printer, comprising:
a plurality of image data input members;
a plurality of print queues for temporarily storing more than one print job information, the print job information including (a) image data of more than one page, which are input from the corresponding image data input member, and (b) print control data;
a job control system for selecting one of the print queues, based on a priority order that can be established by the user, and giving out the print job information in page-sized units; and
an image formation member for forming an image based on the print job information given out by the job control system.

2. The digital multi-functional printer according to claim 1, wherein the job control system comprises a priority order setting system for altering the priority order established by the user.

3. The digital multi-functional printer according to claim 1 or 2, wherein said plurality of image data input members comprises at least one input member of the group consisting of an image scanner for optically reading a manuscript image, a fax modem for receiving facsimile image data, and an interface for providing a connection to an external computer.

4. The digital multi-functional printer according to claim 2, wherein one of said plurality of image data input members is an image scanner, and the priority order setting system of the job control system assigns the highest priority to the print queue holding the print job information that has been input from the image scanner.

5. The digital multi-functional printer according to claim 4, wherein said plurality of image data input members further comprises
a fax modem for receiving facsimile image data, and
an interface for providing a connection to an external computer, and the priority order setting system of the job control system assigns the lowest priority to the print queue holding the print job information that has been input from the interface.

6. The digital multi-functional printer according to any of claims 1 to 5, wherein the job control system interrupts the image formation process based on the print job information of a current image formation after a page-sized unit when print job information was placed in a print queue with a priority that is higher than the priority of the current image formation, and starts image formation based on the print job information placed in the print queue with the higher priority.

7. The digital multi-functional printer according to claim 6, wherein the job control system resumes the image formation based on the print job information placed in the print queue with the lower priority, starting from the page following the interruption when print job information held in the print queue with the higher priority has been exhausted.

8. A digital multi-functional printer, comprising:
a plurality of image data input members;
a plurality of print queues for temporarily storing more than one print job information, the print job information including print control information that comprises image data of more than one page and image type information showing from which image data input member those image data were entered;
a queuing system for storing print job information, based on a priority order that can be established by the user, in one of the print queues depending on the image type information;
a job selector for selecting one of the print queues based on the output priority of image formation that was given to each print queue, and giving out in page-sized units the print job information stored in the selected print queue; and
an image formation member for forming an image based on the print job information that was given out.

9. The digital multi-functional printer according to claim 8, further comprising a priority order setting system for altering the priority order referenced by the queuing system.

10. The digital multi-functional printer according to claim 8 or 9, wherein the plurality of image data input members comprises at least one of the group consisting of an image scanner for optically reading a manuscript image, a fax modem for receiving facsimile image data, and an interface providing a connection to an external computer.

11. The digital multi-functional printer according to claim 10, wherein one of said plurality of image data input members is an image scanner, and the queuing system assigns the highest priority to the print job information that has been input from the image scanner into the print queue.

12. The digital multi-functional printer according to claim 11, wherein
said plurality of image data input members further comprises a fax modem for receiving facsimile image data, and an interface providing a connection to an external computer,
and the queuing system assigns the lowest priority to the print job information that has been input from the interface into the print queue.

13. The digital multi-functional printer according to any of claims 8 to 12, wherein, when print job information was placed in a print queue with a priority that is higher than the priority of the print queue of the current image formation, then the job selector interrupts processing of the print job of the current image formation after a page-sized unit and starts image formation based on the print job information placed in the print queue with the higher priority.

14. The digital multi-functional printer according to claim 13, wherein the job selector resumes the image formation, based on the print job information in the print queue with the lower priority, starting from the page that follows the interruption, when the print job information held in the print queue with the higher priority is exhausted.
